# EUROPEAN PATENT APPLICATION

(11) **EP 4 752 862 A1**
(43) Date of publication of application: **03.06.2026**
(21) Application number: 25218691.1
(22) Date of filing: 26.11.2025
(51) Int. Cl.: G08G 5/21, G06N 3/02, G06N 5/045, G06N 7/01, G06N 20/00, G08G 5/53, G08G 5/54, G08G 5/55, G08G 5/72, G08G 5/76

(54) **ADAPTIVE LEARNING SUPERVISORY CONTROL SYSTEM FOR AVIATION**

(30) Priority: 27.11.2024 US 202463726015 P; 24.11.2025 US 202519398969
(71) Applicant: ARINC Incorporated, Annapolis, MD 21401 (US)
(72) Inventor: CHAKRAVARTY, Subhashish, Marion (US); ANDERSON, Ross D., Lakeville (US); KRONFELD, Kevin M., Cedar Rapids (US)
(74) Representative: Dehns

(57) **Abstract**

Systems and methods are provided. In one example, a method includes receiving one or more sensor and data inputs, and providing the one or more sensor and data inputs to a probabilistic artificial intelligence (AI) model to derive one or more AI model outputs. The method additionally includes deriving, via an aviation supervisory control system, an action based on the one or more AI model outputs, and presenting, via a graphical user interface (GUI), a request for an operator to review the action. The method further includes receiving, via the GUI, an operator approval or operator rejection of the action, and a reasoning for the approval or the rejection. The method also includes applying, via the aviation supervisory control system, the action when there is an operator approval, and updating the probabilistic AI model based on the operator rejection, the operator approval, the operator reasoning, or a combination thereof.

## Description

### CLAIM OF PRIORITY

This patent application claims the benefit of priority to U.S. Provisional Application Serial No. 63/726,015, filed November 27, 2024 and US Application. No. 19/398,969 filed November 24, 2025.

### TECHNICAL FIELD

The present disclosure generally relates to adaptive learning, and more specifically, to adaptive learning supervisory controls for aviation.

### BACKGROUND

Adaptive learning includes automated systems for receiving and interpreting data from multiple sources, such as weather stations and satellite sources. As types and volumes of data increases, more and more aviation systems are applying adaptive learning techniques, including artificial intelligence (AI) techniques, to process and interpret the data. It would be beneficial to improve adaptive learning systems for aviation.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document. Various ones of the appended drawings merely illustrate example embodiments of the present inventive subject matter and cannot be considered as limiting its scope.
FIG. 1 is a block diagram of a control system that includes an adaptive learning supervisory control system (APLS), in accordance with some examples.
FIG. 2 is a block diagram showing further details of the APLS of FIG. 1, in accordance with some examples.
FIG. 3 figure is an information flow diagram illustrating information flows through an APLS data domain and an AI models data domain, according to some examples.
FIG. 4 illustrates a machine learning engine suitable for training the one or more AI models, in accordance with some examples.
FIG. 5 illustrates a process for using the APLS of FIG. 1, in accordance with some examples.
FIG. 6 is a block diagram depicting a machine suitable for executing instructions via one or more processors, in accordance with certain examples.

### DETAILED DESCRIPTION

Reference will now be made in detail to specific example embodiments for carrying out the inventive subject matter. Examples of these specific embodiments are illustrated in the accompanying drawings, and specific details are set forth in the following description in order to provide a thorough understanding of the subject matter. It will be understood that these examples are not intended to limit the scope of the claims to the illustrated embodiments. On the contrary, they are intended to cover such alternatives, modifications, and equivalents as may be included within the scope of the disclosure.

The techniques described herein include examples of an adaptive learning supervisory control system (APLS) for aviation systems. A supervisory control system typically includes a human operator, e.g., supervisory, that provides goals, constraints, and/or procedural information to aid in controlling a complex system, such as an aircraft. The APLS described herein addresses challenges in integrating artificial intelligence (AI) with human expertise in certain environments (e.g., complex aircraft environments) to enhance decision-making processes and improve the reliability of automated systems. The APLS includes several components that work together to create a feedback loop between AI models and human operators, such as pilots, to improve control and operational efficiency of aircraft. These components include a human approver interface, a semantic knowledge graph, AI model(s), and an explainable engine.

The human approver interface enables pilots or operators to provide real-time feedback on the outputs of AI models. This interface presents AI-generated recommendations or observations to the human, who can then indicate, in real-time, whether they agree or disagree with the AI's assessment. Additionally, the interface prompts the user to provide reasons for their agreement or disagreement, capturing contextual information that is then used to improve the AI model(s).

In a weather assessment example, the AI models analyze various data inputs to determine cloud coverage. The human approver interface would present this assessment to the pilot, who could then confirm or reject the AI's conclusion based on their visual observations. If the pilot disagrees, they can indicate that the AI has misinterpreted sun reflections on a water body as cloud cover, for example.

The semantic knowledge graph serves as a repository for historical data as well as for relationships between different factors influencing decision-making. This graph stores not only the AI outputs and corresponding human feedback but also the explainable reasons behind the human's decisions. The knowledge graph utilizes a structure that makes the stored information human-readable and machine-interpretable. In some examples, the semantic knowledge graph includes features such as time of day, season, wind speed, wind direction, and recent observations. These features help contextualize the decision-making process and provide a framework for understanding the factors that influence both AI and human judgments.

The AI models process inputs from various data sources to generate recommendations and/or assessments. In some examples, the AI models employ probabilistic programming techniques to aggregate and analyze data from multiple inputs. These inputs include traditional sources like automated weather stations and forecasts, as well as non-standard sources such as ground-based or airborne cameras. The AI models are designed to adapt and improve over time through continuous online learning. As the AI models receives feedback from human operators, the models adjust their parameters and decision-making processes to align more closely with human expertise. This adaptive capability allows the adaptive learning supervisory control system to become increasingly accurate and more reliable as it accumulates more data and feedback.

The explainable engine is a component that enhances the transparency and trustworthiness of the AI models. This engine generates outputs that help human operators understand the reasoning behind the AI model's decisions. These outputs may include explainable estimates for identification of anomalous data, operator observations, and detection of potentially nefarious data inputs. For instance, the explainable engine can highlight that the AI models' visibility estimate is based primarily on less recent camera footage, while the pilot's disagreement stems from their direct visual observation. This explanation helps bridge the gap between machine analysis and human perception, fostering more trust in the system.

In some examples, the adaptive learning supervisory control system operates in a cyclical manner based on feedback received. Initially, sensor and data inputs are fed into a trained AI model, which generates an assessment or recommendation as output. This output is then presented to the human operator through the user interface. The operator provides feedback, indicating agreement or disagreement and supplying reasons for their decision. This feedback is then processed by the adaptive learning supervisory control system, which updates the semantic knowledge graph with the new information. The AI models use the updated knowledge to refine or tune their decision-making processes. Simultaneously, the explainable engine generates insights about the decision-making process, which are fed back to the human operator through the user interface. In some examples, the system may employ active learning techniques to identify the most informative data points for improving the AI models. This approach helps optimize the learning process by focusing on areas where the model's performance can be more efficiently enhanced.

The described examples address several challenges in the aviation industry. Firstly, they provide a mechanism for incorporating real-time human feedback into AI systems, addressing the regulatory requirement for human oversight in certain decision-making processes. This approach helps bridge the gap between automated systems and human expertise, potentially accelerating the trustworthiness of AI technologies in aviation. Secondly, the system enhances the explainability and decision-making of AI models. By providing for a reasoning for its decisions and incorporating human feedback, the system builds trust between operators and automated systems. Thirdly, the adaptive learning capability of the system allows for continuous improvement of AI models based on real-world operational experiences. This feature helps address the challenge of maintaining AI system performance in dynamic and complex environments like aviation, where conditions and requirements may change over time. The described examples have potential applications across various aspects of aviation as well as other types of operations. These may include weather assessment, flight planning, situational awareness, and decision support for pilots, drone operators, dispatchers, and/or air traffic control systems. The techniques described herein also can provide assistance in non-aviation environments, such as railroad operations, highway vehicle traffic operations, and so on.

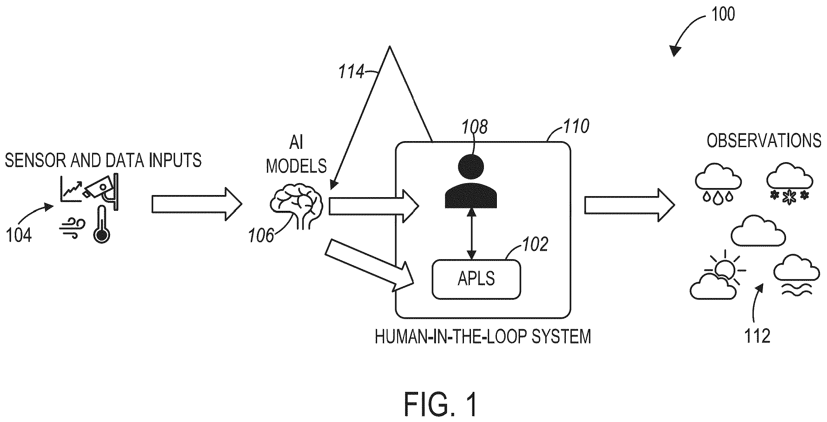

Turning now to FIG. 1, the figure is a block diagram of a control system 100 that includes an adaptive learning supervisory control system (APLS) 102, in accordance with some examples. In the depicted example, sensor and data inputs 104 are captured by a variety of devices, such as weather stations, cameras, satellites (e.g., satellite imagery), aircraft radar, ground-based radar, avionics (e.g., avionic instrument data) and so on. The sensor and data inputs 104 additionally include predictive data, such as meteorological forecasts. The sensor and data inputs 104 are provided into one or more artificial intelligence (AI) models 106, such as probabilistic AI models that can provide indications of confidence levels in addition to assessments and/or predictions. In some examples, the AI models 106 are included in the APLS 102 while in other examples the AI models 106 are external to the APLS 102, for example, as cloud-based models. The AI models 106 use the sensor and data inputs 104 to communicate assessments and/or predictions to the APLS 102. In one example, based on camera data, the AI models 106 derive that cloud cover is heavy as an aircraft is approaching a landing area. The APLS 102 can then adjust certain aircraft operations, such as entering an instrument flight rules mode of operations.

The techniques described herein provide for a fusing of AI models 106 with a human operator 108 via a human-in-the-loop system 110. In the depicted example, the human operator 108 interfaces with the APLS 102, for example, via a human approver interface described in more detail below, to approve or reject the AI models' outputs. The APLS 102 notifies the human operator 108 that heavy cloud cover is being indicated by the AI models 106, and asks the human operator 108 for verification. The human operator 108, such as a pilot or drone operator, observes that the area is relatively clear and thus rejects the AI models' heavy cloud cover assessment. The APLS 102 then continues using a visual flight rules mode as opposed to changing into the instrument flight rules mode.

The human operator 108 also notices a large body of water nearby, such as a lake, which can account for camera data, such a data provided by an aircraft camera, being obfuscated due to light reflections from the lake. The human operator 108 then can add a reasoning for the rejection of the AI models' output based on observations 112. The APLS 102 then uses a feedback system 114 to improve future predictions of the AI models 106, as further described below. In some examples, the human operator 108 rejections cause a data snapshot to be recorded for current data, including sensor and data inputs 104, state data of the AI models 106, human reasoning for the rejection, and/or captured observations 112 to assist with root cause analysis, to identify similar data points, to relabel training data for similar data points, and/or to update the APLS 102.

While the example described was based on cloud cover predictions, any number of predictions via the AI models 106 are similarly processed by the control system 100. By way of example, predicted turbulence, ceiling predictions involving airport dispatcher assessments, rain predictions, lighting predictions, wind direction predictions, threat detection (e.g., radar-based detection of an incoming airborne threat) and so on, are processed via the human-in-the-loop system 110 to fuse AI-based predictions with human oversight. Accordingly, improved control of complex systems, such as aircraft systems, trains, vehicular traffic, and the like, are provided.

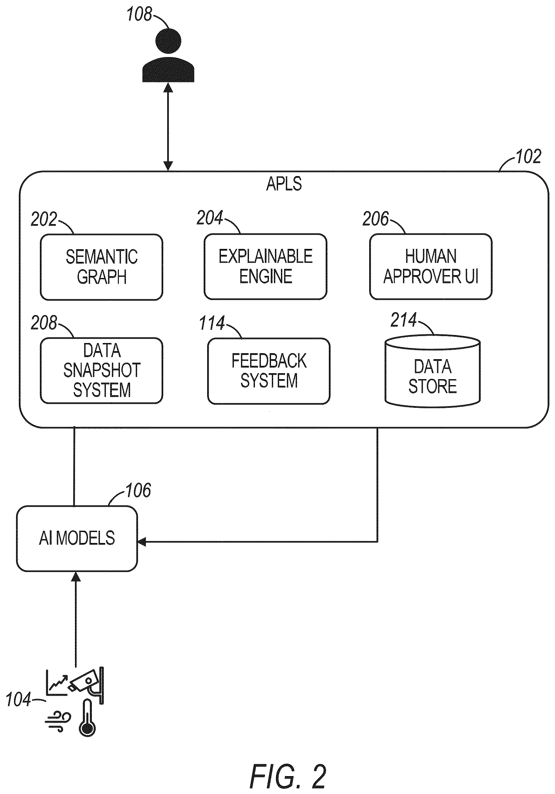

FIG. 2 is a block diagram showing further details of the APLS 102, in accordance to some examples. In the depicted example, The APLS 102 includes the feedback system 114, a semantic graph 202, an explainable engine 204, a human approver user interface (UI) 206, such as a graphical user interface (GUI), and a data snapshot system 208. The AI model 106 are also shown, which, in some examples are also included in the APLS 102. As mentioned above, sensor and data inputs 104 are fed into the AI models 106 to derive one or more assessment and/or predictions. The APLS 102 determines that some of the assessments and/or predictions would benefit from human supervision and thus notifies the human operator 108, via the human approver UI 206, of a request for approval or rejection of the assessments and/or predictions. The human approver UI 206 can include, for example a display, lights, noise alerts, haptic alerts, and so on, suitable for notifying the human operator 108 of the request for approval or rejection. The human operator 108 will then review the request via the human approver UI 206, which can include reading details of the request (e.g., "instrument flight rules mode about to be entered based on AI heavy cloud cover assessment) and/or hearing details of the request.

The human operator 108 can also ask for further details of the request via the human approver UI 206, such as by asking for additional information. In some examples, the explainable engine 204 is used to provide further details of the request. The explainable engine 204 is operatively coupled to the AI models 106 and provides information such as what specific sensor and data inputs 104 were used (e.g., onboard flight camera capturing under-fuselage footage), as well as a confidence level of the outputs provided by the AI models 106.

As mentioned earlier, the AI models 106 include probabilistic AI models. As referred to herein, a probabilistic AI model is an AI model that provides a confidence level based on its training and/or computations. The confidence level includes a probability of accuracy. For example, an AI model 106 can predict that an image captured by the onboard flight camera has an 80% chance of heavy cloud cover based on training and/or other sensor inputs, such as temperature data, ambient pressure data, windspeed data, and so on. A non-exhaustive list of model types used for the AI model 106 include Gaussian Mixture Models (GMMs), Hidden Markov Models (HMMs), Bayesian networks, Probabilistic Neural Networks (PNNs), Probabilistic State Vector Machines (PSVMs), and so on. In some examples, the PNNs, include artificial neural networks that classifies data by estimating the probability distribution of each training class (e.g., heavy cloud cover, light cloud cover, no cloud cover) and can be based on the concept of Bayes' decision rule. PSVMs build on the core structure of State Vector Machines (SVMs), where a hyperplane is used to separate data points in a high-dimensional space. However, rather than just outputting a class label (e.g., heavy cloud cover), PSVMs also estimate the probability associated with that classification.

The semantic graph 202 is a graph-based knowledge repository that stores and organizes a graph data structure having nodes interconnected via edges. The graph data structure stores certain operational knowledge as well as historical results from human operator 108 feedback and corresponding AI models 106 outputs in a human-readable and machine-interpretable format. The semantic graph 202 captures and stores explainable reasons behind human decisions, creating relationships (e.g., edges) between different factors (e.g., nodes) that influence decision-making. For example, when the human operator 108 disagrees with an AI model's assessment of visibility conditions, the semantic graph 202 stores not only the disagreement but also the contextual features or factors and reasoning behind that decision. For example, the features and factors for cloud cover or other weather observations include temperature, time of day, season, wind speed/direction, ambient pressure, and/or recent observations 112. In addition to stores causal model features, the sematic semantic graph 202 additionally creates new causal knowledge which explain why the human operators 108 agree or disagree with AI recommendations. In some examples, the semantic graph 202 is provided in both human and machine-readable form, such as via AllegroGraph formats, Ontology Web Language (OWL) format, GraphDB formats, various types of eXtensible Markup Language (XML) formats, and so on.

Accordingly, the AI models 106 and/or the APLS 102 can use the semantic graph 202 as another input when deriving assessments and/or predictions. For example, the AI models 106 can be trained on semantic graph data to derive certain assessments/predictions, while the APLS 102 can provide the semantic graph 202 with input features (e.g., temperature is 51∘ F, ambient pressure is 900 millibars, AI assessed cloud cover is "very cloudy") to determine that a switch to instrument flight rules is warranted. In some examples, the semantic graph 202 is also used by the explainable engine 204 to provide an explanation of an assessment and/or prediction arrived to via the AI models 106. The explainable engine 204 uses the semantic graph 202 to navigate as to how the assessment/prediction was arrived to, and then provide a subgraph of the semantic graph 202 that shows the nodes and relationships involved, and/or translate into text or spoken word, the subgraph. In some examples, the translation into text or spoken word is performed via generative AI techniques, such as via transformer-based AI models that are included in or accessible to the explainable engine 204.

The feedback system 114 also uses the semantic graph 202 to "grow" and/or to modify the semantic graph 202 based on feedback received. In some examples, when the human operator 108 disagrees with an AI assessment of visibility conditions, the feedback system 114 stores in the semantic graph 202 not only the disagreement but also the contextual factors and reasoning behind that decision. The contextual factors include data snapshots captured via the data snapshot system 208 that include sensor and data inputs 104 used to make the assessment/prediction, human operator 108 inputs, including acceptance/rejection, any reasons provided for the acceptance/rejection, confidence level(s) provided by the AI models 106, and any subgraph (or in some cases, the current state) of the semantic graph 202 used to derive the decision. The data snapshot system 208 stores, in some examples, the data snapshots in a data store 214, such as a relational database, a file system, a network database, and so on. By providing for feedback via data snapshots, the APLS 102 can adaptively and continuously improve AI-enhanced operations, such as AI-enhanced aviation operations.

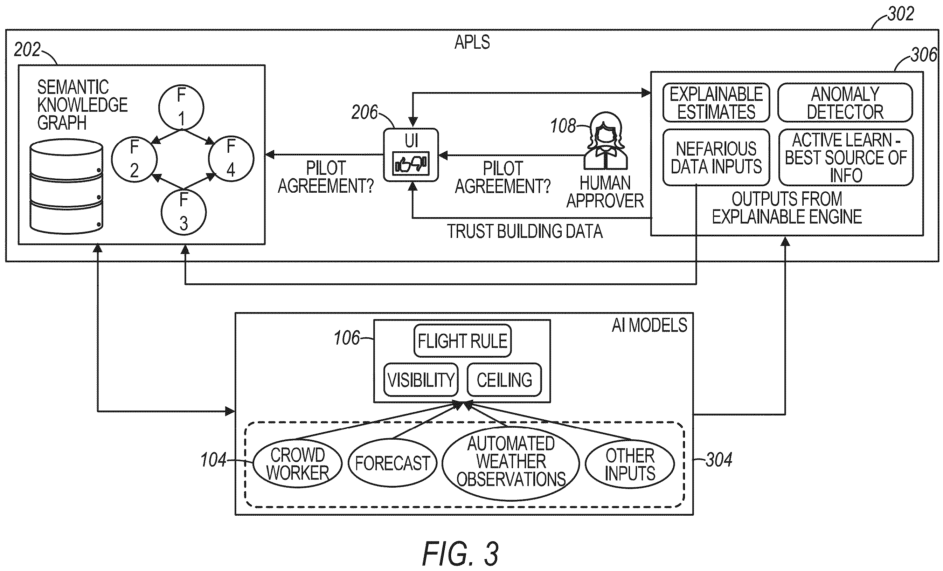

It would be beneficial to illustrate an information flow in certain data domains, such as APLS 102 data domains. Turning now to FIG. 3, the figure is an information flow diagram illustrating information flows through an APLS data domain 302 and an AI models data domain 304, according to some examples. In the depicted example, the sensor and data inputs 104 first enter the AI models data domain 304 and are processed by the AI models 106. Various sensor and data inputs 104 are shown, including inputs from cloud watchers, weather forecast inputs, automated weather observation inputs (e.g., obtained via cameras, temperature sensors, pressure sensors, wind speed sensors, and so on), as well as other inputs that are useful, such as avionics inputs (e.g., aircraft speed, location, yaw, climb angle, and so on). The AI models 106 will then process the sensor and data inputs 104 to derive certain outputs. The AI models 106 include flight rule models, visibility models, ceiling models, and so on, that derive respective assessments for flight rule modes, visibility assessments, ceiling assessments, and the like.

The outputs of the AI models 106 enter the APLS data domain 302, where they are converted into explainable outputs, such as into outputs from explainable engine 306. More specifically, the human operator 108 is presented with a validation request based on an AI model's assessment via the human approver UI 206 and uses the human approver UI 206 to approve or to reject the validation request. As mentioned earlier, the human operator 108 can add reasons for approval or for rejection, such as based on the observations 112. The explainable engine 204 can then use the semantic graph 202 to aid in the creation of the outputs from explainable engine 306.

The outputs from explainable engine 306 include various output types, such as anomaly detector outputs. The anomaly detector output type identifies situations where the AI model's data or outputs have low confidence levels or appear to be outside normal operating parameters. Some functions of the anomaly detector outputs include detecting when environmental conditions make sensor data unreliable (e.g., sun reflections off water bodies interfering with cloud cover estimates), identifying situations that are outside the AI model's trained scope or capabilities, and recognizing when current data patterns deviate significantly from historical observations stored in the semantic knowledge graph.

The outputs from explainable engine 306 also include an active learning - best source of information output type. This output type identifies the certain valuable data points for training the AI models 106. Some aspects of this output type include using active learning techniques to determine which data points would be most beneficial for improving the AI models 106 training or configuration, identifying boundaries between different categories of data that need clearer demarcation, and working within the continuous online learning framework to select more optimal training examples during real-time operation.

The outputs from explainable engine 306 additionally include a nefarious data input output type. Nefarious data inputs include potentially malicious, spoofed, or unreliable data that could compromise the AI system's decision-making. For example, in aviation communications, this could include spoofed global positioning system (GPS) signals that show fake aircraft positions or compromised Aircraft Communication Addressing and Reporting System (ACARS) messaging that lacks security. The explainable engine 204 includes specific functionality to detect and identify these nefarious data inputs as part of its output. The detection of nefarious inputs helps determine when data may not be trustworthy for the AI algorithm's use.

The outputs from explainable engine 306 further include an explainable estimates output type. This output type provide transparency into how and why the AI models 106 make specific decisions. That is, the explainable estimates provide for detailed explanations of how the AI models 106 have been used to derive the confidence levels, the use of the semantic graph 202 to derive certain decisions, and so on. As mentioned above, the explanation estimates can include textual explanations, spoken explanations, and the like, describing data sources for the sensor and data inputs 104, and reasoning via the semantic graph 202 and/or AI models 106 for the assessment or rejected.

In the depicted example the outputs from explainable engine 306 are used to improve the semantic graph 202 by adding new causal knowledge, such as the reasons why the human operator 108 did not agree with the assessment, by updating existing causal knowledge, and/or removing existing causal knowledge (e.g., finding errors in the semantic graph 202 and correcting the errors via updates and/or deletes of information). The semantic graph 202 is used to update the AI models 106, for example by recalibrating the AI model 106 and/or retraining the AI models 106, as further described below. By providing for information flows, including feedback flows, the techniques described herein continuously increase accuracy and predictive capabilities of the semantic graph 202 and AI model 106.

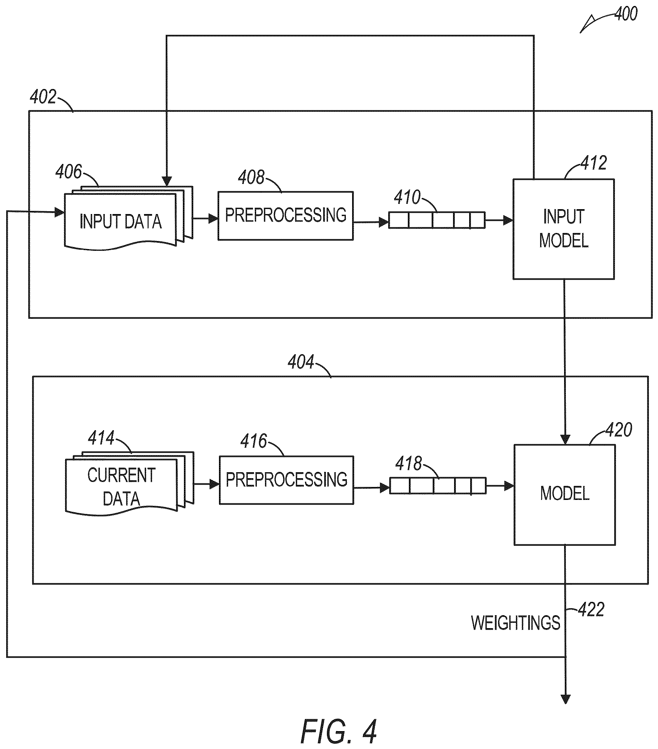

FIG. 4 illustrates a machine learning engine 400 suitable for training the one or more AI models 106, in accordance with some examples. The machine learning engine 400 may be deployed to execute at a mobile device (e.g., a cell phone), a computer, a server, a cloud-based system, and so on. In some examples, a system, such as the APLS 102, may calculate one or more weightings for criteria based upon one or more machine learning algorithms via the machine learning engine 400, used in training the AI model 106.

In the depicted example, the machine learning engine 400 uses a training engine 402 and a prediction engine 404. The training engine 402 uses input data 406, for example after undergoing preprocessing via the preprocessing component 408, to determine one or more features 410. The one or more features 410 may be used to generate an initial input model 412, which may be updated iteratively or with future labeled or unlabeled data (e.g., during reinforcement learning or fine tuning).

For the AI models 106, the input data 406 includes a corpus of subject matter material useful in deriving certain assessments, such as assessments useful in aviation operations. Accordingly, the input data 406 includes weather data, such as cloud cover images, cloud ceiling images, wind speed graphs, rain accumulation histories, temperature histories, pressure histories, weather forecast histories and respective weather measurements, and so on.

In the prediction engine 404, current data 414 may be input to preprocessing component 416. In some examples, preprocessing component 416 and preprocessing component 408 are the same. The prediction engine 404 produces feature vector 418 from the preprocessed current data, which is input into the model 420 to generate one or more criteria weightings 422. The criteria weightings 422 may be used to output a prediction, as discussed further below.

The training engine 402 may operate in an offline manner to train the model 420 (e.g., on a server). The prediction engine 404 may be designed to operate in an online manner (e.g., in real-time, at a mobile device, on a wearable device, etc.). In some examples, the model 420 may be periodically updated via additional training (e.g., via updated input data 406 or based on labeled or unlabeled data output in the weightings 422) or based on identified future data, such as by using reinforcement learning to personalize a general model (e.g., the initial model 412) to a particular user and/or organization. Labels for the input data 406 may include labeling of certain knowledge, such as "heavy cloud cover image", "radar anomaly image", and so on.

The initial model 412 may be updated using further input data 406 until a satisfactory model 420 is generated. The model 420 generation may be stopped according to a specified criteria (e.g., after sufficient input data is used, such as 400,000, 1 million, 2 billion data points, etc.) or when data converges (e.g., similar inputs produce similar outputs).

The specific machine learning algorithm used for the training engine 402 may be selected from among many different potential supervised or unsupervised machine learning algorithms. Examples of supervised learning algorithms include artificial neural networks, Bayesian networks, instance-based learning, support vector machines, decision trees (e.g., Iterative Dichotomiser 3, C9.5, Classification and Regression Tree (CART), Chi-squared Automatic Interaction Detector (CHAID), and the like), random forests, linear classifiers, quadratic classifiers, k-nearest neighbor, linear regression, logistic regression, and hidden Markov models. Examples of unsupervised learning algorithms include expectation-maximization algorithms, vector quantization, and information bottleneck method. Unsupervised models may not have a training engine 402. In an example embodiment, a regression model is used and the model 420 is a vector of coefficients corresponding to a learned importance for each of the features in the vector of features 410, 418. A reinforcement learning model may use Q-Learning, a deep Q network, a Monte Carlo technique including policy evaluation and policy improvement, a State-Action-Reward-State-Action (SARSA), a Deep Deterministic Policy Gradient (DDPG), or the like. Once trained, the model 420 may now correspond to the trained LLMs AI models 106.

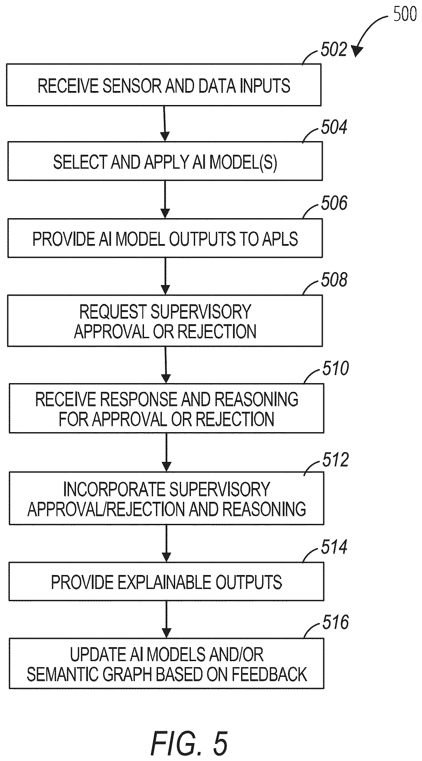

FIG. 5 is a flowchart of a process 500 suitable for using the APLS 102 according to certain examples. In the depicted example, the process 500 receives, at block 502, one or more sensor and data inputs 104. For example, weather stations, cameras, satellites (e.g., satellite imagery), aircraft radar, ground-based radar, avionics (e.g., avionic instrument data), human observers, and so on, provide the sensor and data inputs 104. The process 500, at block 504, then selects one or more AI models 106 to apply, for example, based on the sensor and data inputs 104. That is, the sensor and data inputs 104 are flagged by model type. For example, a bottom facing aircraft camera image can be tagged to provide cloud cover model input data, visibility model input data, landing model input data, and so on. Likewise, a weather station data can be tagged to provide turbulence model input data, cloud cover input data, rain prediction input data, and so on.

The process 500 uses to the sensor and data inputs 104 as inputs to the one or more selected AI models 106 to then derive one or more AI-derived outputs. The AI-derived outputs, at block 504, are then used as inputs by the APLS 102. For example, an AI-derived output assessment that there is currently heavy cloud cover is provided to the APLS 102. The APLS 102 then determines that an action to be performed based on the assessment of heavy cloud cover is to switch over to a mode that uses instrument flight rules. However, certain actions based on AI model outputs are flagged to additionally use human input, such as switching from visual flight rules to instrument flight rules. Accordingly, the process 500 requests, at block 508 supervisory approval or rejection of the action of switching over from visual flight rules to instrument flight rules.

The human operator 108 receives the request, for example, via a light, a sound, a haptic feedback, a textual display and so on, including a message that the APLS 102 would like to switch over to instrument flight rules based on the cloud cover AI assessment. The human operator 108 then responds to the request. More specifically, the human operator 108 uses observations 112 to determine if the AI assessment should be accepted or rejected, and can additionally include a reasoning for the approval or the rejection.

The process 500 then incorporates, at block 512, the approval or rejection as well as any reasoning provided by the human operator 108. For example, an approval is then used by the APLS 102 to perform the action, e.g., enter instrument flight rules, and to take a data snapshot for further use via the feedback system 114. A rejection stops the APLS 102 from performing the action, e.g., switching away from visual flight rules, and likewise a data snapshot and the feedback system 114 is then engaged. Additionally, outputs from explainable engine 306 are provided at block 514. That is, the semantic graph 202 can be navigated to derive how certain inputs resulted in the assessment provided, and confidence levels can also be used to ascertain accuracy of assessments. The AI model 106 and/or the semantic graph 202 are then updated via the feedback system 114. As mentioned above, the human operator's inputs are used to improve the AI model 106 and/or the semantic graph 202, thus resulting in a more accurate control system 100.

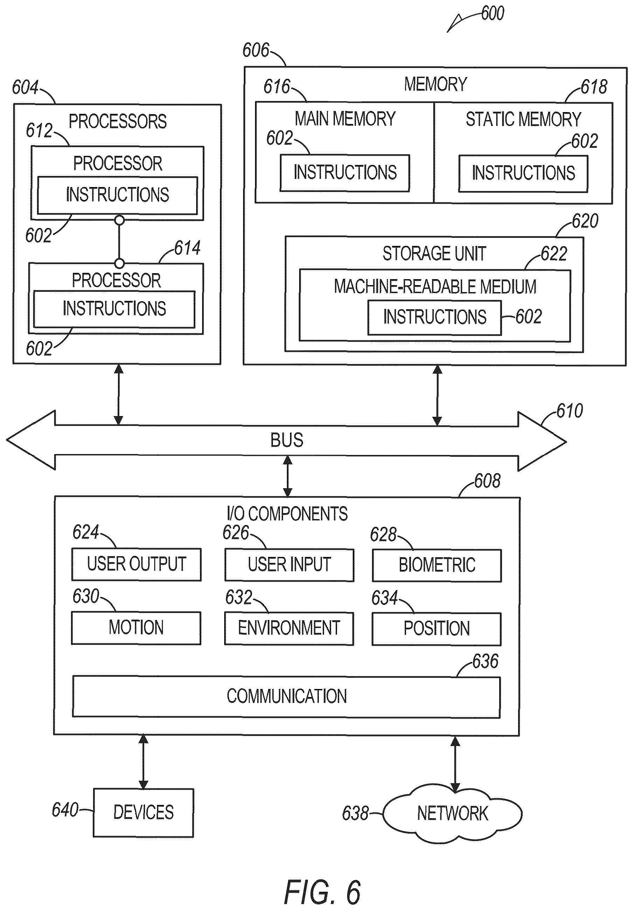

FIG. 6 is a diagrammatic representation of a machine 600 within which instructions 602 (e.g., software, a program, an application, an applet, an app, or other executable code) for causing the machine 600 to perform any one or more of the methodologies discussed herein may be executed. For example, the instructions 602 may cause the machine 600 to execute any one or more of the processes or methods described herein, such as the process 200. The instructions 602 transform the general, non-programmed machine 600 into a particular machine 600, e.g., the APLS 102, the control system 100, programmed to carry out the described and illustrated functions in the manner described. The machine 600 may operate as a standalone device or may be coupled (e.g., networked) to other machines. In a networked deployment, the machine 600 may operate in the capacity of a server machine or a client machine in a server-client network environment, or as a peer machine in a peer-to-peer (or distributed) network environment. The machine 600 may comprise, but not be limited to, a server computer, a client computer, a personal computer (PC), a tablet computer, a laptop computer, a netbook, a set-top box (STB), a personal digital assistant (PDA), an entertainment media system, a cellular telephone, a smartphone, a mobile device, a wearable device (e.g., a smartwatch), a smart home device (e.g., a smart appliance), other smart devices, a web appliance, a network router, a network switch, a network bridge, or any machine capable of executing the instructions 602, sequentially or otherwise, that specify actions to be taken by the machine 600. Further, while a single machine 600 is illustrated, the term "machine" shall also be taken to include a collection of machines that individually or jointly execute the instructions 602 to perform any one or more of the methodologies discussed herein. In some examples, the machine 600 may also comprise both client and server systems, with certain operations of a particular method or algorithm being performed on the server-side and with certain operations of the particular method or algorithm being performed on the client-side.

The machine 600 may include processors 604, memory 606, and input/output I/O components 608, which may be configured to communicate with each other via a bus 610. In an example, the processors 604 (e.g., a Central Processing Unit (CPU), a Reduced Instruction Set Computing (RISC) Processor, a Complex Instruction Set Computing (CISC) Processor, a Graphics Processing Unit (GPU), a Digital Signal Processor (DSP), an Application-Specific Integrated Circuit (ASIC), a Radio-Frequency Integrated Circuit (RFIC), another processor, or any suitable combination thereof) may include, for example, a processor 612 and a processor 614 that execute the instructions 602. The term "processor" is intended to include multi-core processors that may comprise two or more independent processors (sometimes referred to as "cores") that may execute instructions contemporaneously. Although FIG. 6 shows multiple processors 604, the machine 600 may include a single processor with a single-core, a single processor with multiple cores (e.g., a multi-core processor), multiple processors with a single core, multiple processors with multiples cores, or any combination thereof.

The memory 606 includes a main memory 616, a static memory 618, and a storage unit 620, both accessible to the processors 604 via the bus 610. The main memory 616, the static memory 618, and storage unit 620 store the instructions 602 embodying any one or more of the methodologies or functions described herein. The instructions 602 may also reside, completely or partially, within the main memory 616, within the static memory 618, within machine-readable medium 622 within the storage unit 620, within at least one of the processors 604 (e.g., within the processor's cache memory), or any suitable combination thereof, during execution thereof by the machine 600.

The I/O components 608 may include a wide variety of components to receive input, provide output, produce output, transmit information, exchange information, capture measurements, and so on. The specific I/O components 608 that are included in a particular machine will depend on the type of machine. For example, portable machines such as mobile phones may include a touch input device or other such input mechanisms, while a headless server machine will likely not include such a touch input device. It will be appreciated that the I/O components 608 may include many other components that are not shown in FIG. 6. In various examples, the I/O components 608 may include user output components 624 and user input components 626. The user output components 624 may include visual components (e.g., a display such as a plasma display panel (PDP), a light-emitting diode (LED) display, a liquid crystal display (LCD), a projector, or a cathode ray tube (CRT)), acoustic components (e.g., speakers), haptic components (e.g., a vibratory motor, resistance mechanisms), other signal generators, and so forth. The user input components 626 may include alphanumeric input components (e.g., a keyboard, a touch screen configured to receive alphanumeric input, a photo-optical keyboard, or other alphanumeric input components), point-based input components (e.g., a mouse, a touchpad, a trackball, a joystick, a motion sensor, or another pointing instrument), tactile input components (e.g., a physical button, a touch screen that provides location and force of touches or touch gestures, or other tactile input components), audio input components (e.g., a microphone), and the like.

In further examples, the I/O components 608 may include biometric components 628, motion components 630, environmental components 632, or position components 634, among a wide array of other components. For example, the biometric components 628 include components to detect expressions (e.g., hand expressions, facial expressions, vocal expressions, body gestures, or eye-tracking), measure biosignals (e.g., blood pressure, heart rate, body temperature, perspiration, or brain waves), identify a person (e.g., voice identification, retinal identification, facial identification, fingerprint identification, or electroencephalogram-based identification), and the like. The motion components 630 include acceleration sensor components (e.g., accelerometer), gravitation sensor components, rotation sensor components (e.g., gyroscope).

The environmental components 632 include, for example, one or cameras (with still image/photograph and video capabilities), illumination sensor components (e.g., photometer), temperature sensor components (e.g., one or more thermometers that detect ambient temperature), humidity sensor components, pressure sensor components (e.g., barometer), acoustic sensor components (e.g., one or more microphones that detect background noise), proximity sensor components (e.g., infrared sensors that detect nearby objects), gas sensors (e.g., gas detection sensors to detection concentrations of hazardous gases for safety or to measure pollutants in the atmosphere), or other components that may provide indications, measurements, or signals corresponding to a surrounding physical environment. The position components 634 include location sensor components (e.g., a global positioning system (GPS) receiver component), altitude sensor components (e.g., altimeters or barometers that detect air pressure from which altitude may be derived), orientation sensor components (e.g., magnetometers), and the like.

Communication may be implemented using a wide variety of technologies. The I/O components 608 further include communication components 636 operable to couple the machine 1200 to a network 638 or devices 640 via respective coupling or connections. For example, the communication components 636 may include a network interface component or another suitable device to interface with the network 638. In further examples, the communication components 636 may include wired communication components, wireless communication components, cellular communication components, Near Field Communication (NFC) components, Bluetooth^{®} components (e.g., Bluetooth^{®} Low Energy), Wi-Fi^{®} components, and other communication components to provide communication via other modalities. The devices 640 may be another machine or any of a wide variety of peripheral devices (e.g., a peripheral device coupled via a universal serial bus (USB) port), internet-of-things (IoT) devices, and the like.

Moreover, the communication components 636 may detect identifiers or include components operable to detect identifiers. For example, the communication components 636 may include Radio Frequency Identification (RFID) tag reader components, NFC smart tag detection components, optical reader components (e.g., an optical sensor to detect one-dimensional bar codes such as Universal Product Code (UPC) bar code, multi-dimensional bar codes such as Quick Response (QR) code, Aztec code, Data Matrix, Dataglyph, MaxiCode, PDF417, Ultra Code, UCC RSS-2D bar code, and other optical codes), or acoustic detection components (e.g., microphones to identify tagged audio signals). In addition, a variety of information may be derived via the communication components 636, such as location via Internet Protocol (IP) geolocation, location via Wi-Fi^{®} signal triangulation, location via detecting an NFC beacon signal that may indicate a particular location, and so forth.

The various memories (e.g., main memory 616, static memory 618, and memory of the processors 604) and storage unit 620 may store one or more sets of instructions and data structures (e.g., software) embodying or used by any one or more of the methodologies or functions described herein. These instructions (e.g., the instructions 602), when executed by processors 604, cause various operations to implement the disclosed examples.

The instructions 602 may be transmitted or received over the network 638, using a transmission medium, via a network interface device (e.g., a network interface component included in the communication components 636) and using any one of several well-known transfer protocols (e.g., hypertext transfer protocol (HTTP)). Similarly, the instructions 602 may be transmitted or received using a transmission medium via a coupling (e.g., a peer-to-peer coupling) to the devices 640.

The techniques described herein provides a generative AI approach to policy alerting, policy drafting, and policy management, offering organizations a proactive, intelligent, and customizable solution for navigating the complexities of policy changes. By leveraging the capabilities of a Large Language Model (LLM), the system continuously monitors one or more databases for changes to policy records, retrieves these changes, and utilizes the LLM to analyze the implications of these changes on various entities within the organization. The LLM identifies which entities are affected by the policy changes. It does so by processing the changes as input and deriving a potential impact for each affected entity. The system is designed to identify entities whose potential impact exceeds a customizable threshold, ensuring that only the most pertinent changes are flagged for further attention. Once the system identifies the affected entities, it generates an impact assessment report for each one. This report is not a mere notification but a comprehensive analysis that outlines the implications of the policy changes, providing actionable insights for the recipients. The LLM's sophisticated understanding of language and context allows it to produce reports that are tailored to the specific needs and functions of each entity, thereby enhancing the relevance and utility of the information provided.

## Claims

1. A method, comprising:
receiving one or more sensor and data inputs (104);
providing the one or more sensor and data inputs (104) to a probabilistic artificial intelligence, AI, model to derive one or more AI model outputs;
deriving, via an aviation supervisory control system, an action based on the one or more AI model outputs;
presenting, via a graphical user interface, GUI, a request for an operator to review the action;
receiving, via the GUI, an operator approval or an operator rejection of the action;
receiving, via the GUI, an operator reasoning for the operator approval or the operator rejection;
applying, via the aviation supervisory control system, the action when there is an operator approval; and
updating the probabilistic AI model based on the operator rejection, the operator approval, the operator reasoning, or a combination thereof.

2. The method of claim 1, wherein deriving, via the aviation supervisory control system, the action based on the one or more AI model outputs, comprises deriving the action based on the one or more AI model outputs and on a semantic knowledge graph, and optionally, wherein the semantic knowledge graph comprises nodes representative of features connected via edges representative or relationships between the features.

3. The method of any preceding claim, wherein the probabilistic AI model is configured to provide a confidence level representative of an accuracy estimate of the one or more AI model outputs.

4. The method of any preceding claim, comprising capturing a data snapshot, the data snapshot comprising the one or more sensor and data inputs, the AI model outputs, the operator approval, the operator rejection, the operator reasoning, a semantic knowledge graph, or a combination thereof, and optionally wherein updating the probabilistic AI model comprises analyzing the data snapshot to update the probabilistic AI model, the semantic knowledge graph, or a combination thereof.

5. The method of any preceding claim, comprising, generating, via an explainable engine, a human-understandable output of the derivation of the one or more AI model outputs.

6. The method of claim 5, wherein the human-understandable output comprises an anomaly detector output type, a nefarious data input output type, an active learning - best source of information output type, and an explainable estimates output type.

7. The method of claim 6, wherein the anomaly detector output type identifies comprises one or more AI model outputs that have low confidence levels, that are outside of normal operating parameters, or a combination thereof, or wherein the nefarious data input output type comprises malicious data, spoofed data, or a combination thereof.

8. The method of claim 6, wherein the active learning - best source of information output data type comprises data points useful for updating the probabilistic AI model, data points useful in identifying boundaries between different categories of data that need clearer demarcation, or a combination thereof, or wherein the explainable estimates output type comprises a textual explanation, a spoken explanation, or a combination thereof, of the derivation of the one or more AI model outputs, the action, or the combination thereof.

9. The method of any preceding claim, wherein the AI model comprises a Gaussian Mixture Model, GMM, a Hidden Markov Model, HMM, a Bayesian network, a Probabilistic Neural Network, PNN, a Probabilistic State Vector Machine, PSVM, or a combination thereof.

10. The method of any preceding claim, wherein the one or more sensor and data inputs comprise a weather forecast, a camera image, a radar output, a satellite output, a weather station output, a visual observation, or a combination thereof.

11. The method of any preceding claim, wherein the probabilistic AI model is configured to detect a cloud cover metric, a cloud ceiling metric, a visibility metric, or a combination thereof, and/or wherein the action comprises activating an aircraft operating mode.

12. An avionics system, comprising:
a memory (606) storing instructions; and
a processor 9604) configured to execute the instructions to:
receive one or more sensor and data inputs (104);
provide the one or more sensor and data inputs (104) to a probabilistic artificial intelligence (AI) model to derive one or more AI model outputs;
derive, via an aviation supervisory control system, an action based on the one or more AI model outputs;
present, via a graphical user interface, GUI, a request for an operator to review the action;
receive, via the GUI, an operator approval or an operator rejection of the action;
receive, via the GUI, an operator reasoning for the operator approval or the operator rejection;
apply, via the aviation supervisory control system, the action when there is an operator approval; and
update the probabilistic AI model based on the operator rejection, the operator approval, the operator reasoning, or a combination thereof.

13. The avionics system of claim 12, wherein deriving, via the aviation supervisory control system, the action based on the one or more AI model outputs, comprises deriving the action based on the one or more AI model outputs and on a semantic knowledge graph.

14. A non-transitory computer-readable medium storing instructions that, when executed by one or more processors of a computer system, cause the computer system to perform operations comprising:
receiving one or more sensor and data inputs;
providing the one or more sensor and data inputs to a probabilistic artificial intelligence (AI) model to derive one or more AI model outputs;
deriving, via an aviation supervisory control system, an action based on the one or more AI model outputs;
presenting, via a graphical user interface, GUI, a request for an operator to review the action;
receiving, via the GUI, an operator approval or an operator rejection of the action;
receiving, via the GUI, an operator reasoning for the operator approval or the operator rejection;
applying, via the aviation supervisory control system, the action when there is an operator approval; and
updating the probabilistic AI model based on the operator rejection, the operator approval, the operator reasoning, or a combination thereof.

15. The non-transitory computer-readable medium of claim 14, wherein deriving, via the aviation supervisory control system, the action based on the one or more AI model outputs, comprises deriving the action based on the one or more AI model outputs and on a semantic knowledge graph.
